# EUROPEAN PATENT APPLICATION

(11) **EP 0 711 045 A1**
(43) Date of publication of application: **08.05.1996**
(21) Application number: 95116490.4
(22) Date of filing: 19.10.1995
(51) Int. Cl.: H04B 10/06

(54) **Circuit to shunt excess photocurrent in optical receivers**

(30) Priority: 04.11.1994 US 334664
(71) Applicant: INTERNATIONAL BUSINESS MACHINES CORPORATION, Armonk, N.Y. 10504 (US)
(72) Inventor: Rogers, Dennis Lee, Croton on Hudson, New York 15020 (US); Ritter, Mark B., Danbury, Connecticut 06811 (US)
(74) Representative: Schäfer, Wolfgang, Dipl.-Ing.

(57) **Abstract**

A clamping circuit for shunting excess photocurrent in an optical receiver is disclosed. In one preferred embodiment, matching transistors are coupled in parallel across the input to an amplifier in the optical receiver. The output of the amplifier is coupled so as to turn the transistors on when the photocurrent reaches a predetermined level, and therefore divert the flow of current away from the input to the amplifier. In another preferred embodiment, a schottky diode circuit is coupled across the input to the amplifier. The schottky is biased so as to conduct, and thereby divert current away from the input of the amplifier, when the photodetector current reaches a predetermined threshold.

## Description

### Field of the Invention

The invention relates to optical receivers, and in particular to a circuit for shunting excess photocurrent in such circuits.

### Background of the Invention

Optical receivers used in infrared (IR) communication typically consist of a photodiode which converts optical signals to electrical current followed by one or more amplification stages and a decision circuit to convert the amplified analog signal to digital format. Such receivers used for IR wireless applications must operate over a wide range of input signal levels. Ideally, one would like a receiver with high-gain to allow communication for a distance of a meter or more while at the same time allowing close-proximity communication where the optical signal can be more than 100,000 times larger.

To accomplish this, some people use AGC (Automatic Gain Control) which adjusts the receiver gain based on the level of the input signal. The drawback with this approach is that the AGC circuit takes time to discern the actual signal level-- many bit periods are required for the circuitry to lock-in. As a consequence, for large signals the first bits of data are usually lost as the amplifier is overloaded.

Another method of providing a large dynamic range is to use a fixed the decision threshold. With this method, however, a reduction in sensitivity results because the threshold must be set to a worst-case value. However, increasing the current (the bias point of the transistors, for example) also increases noise in the circuit (as well as power dissipation) and tends to reduce the sensitivity of the receiver.

### Summary of the Invention

The present invention solves the above problems and aims at providing a low-power circuit with excellent sensitivity while also allowing wide dynamic range. We accomplish this by shunting excess photocurrent at the input of the first amplifier stage, thereby effectively "clamping" the maximum photocurrent which the amplifiers see.

### Figures

- FIG. 1: is a FET-based clamping circuit in accordance with the invention.
- FIG. 2: is a diode-based clamping circuit in accordance with the invention.

### Detailed Description

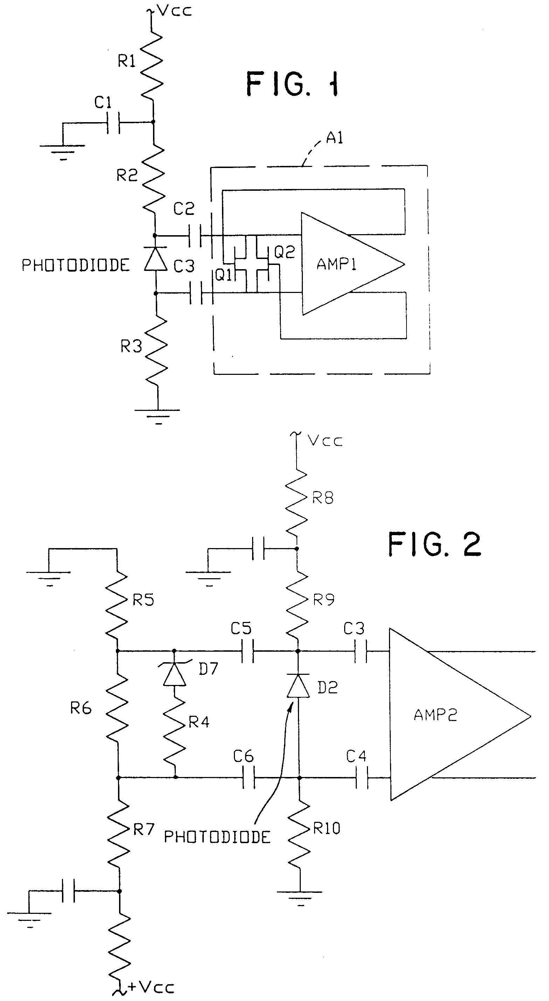

A preferred implementation of this clamp circuit is shown in FIG. 1. The circuit comprises a photodiode D2, resistors R1 and R2 coupled to the cathode of the photodiode, a capacitor C2 coupled to the junction of resistors R1 and R2, a resistor R3 coupled to the anode of photodiode D2, and a dual input amplifier circuit A1 coupled across the photodiode. The dual input amplifier is connected across the diode via coupling capacitors C2 and C3 to remove DC bias. Matched enhancement mode FETs Q1 and Q2 are connected across the inputs to an amplifier AMP1, as shown. Here we assume that matched FETs and transistors are available (for example, by designing an ASIC). The outputs of the amplifier AMP1 are each coupled to a gate of a different one of the FETs Q1, Q2.

The circuit of FIG.1 employs a feedback amplifier AMP1 (e.g., transimpedance) wherein the signals at the output of the amplifier are used to switch on the FETs Q1, Q2 when the voltage exceeds the FET threshold voltage. When the FETs turn on, any excess photocurrent is shorted and prevented from entering the amplifier.

In an alternative embodiment, an inverting differential amplifier can be used with NFETs, configured as shown in FIG. 1. One can also design this type of photocurrent clamp using other types of FETs, or for non-inverting or single-ended amplifiers. At low signal levels, Q₁ and Q₂ remain completely off, eliminating any noise they might otherwise contribute.

FIG. 2 is another preferred embodiment of the invention. The circuit comprises an amplifier AMP2, having inputs capacitively coupled via capacitors C3 and C4 across photodiode D2. The cathode of D2 is biased to a level determined by the voltage divider comprising resistors R8, R9 and R10. Also capacitively coupled across the photodiode D2, via capacitors C5 and C6, is a diode D7. In a preferred embodiment of the invention, D7 is a schottky diode. It will be understood, however, that in circuits in which the photodiode has a sufficiently high capacitance, the schottky diode of the preferred embodiment can be replaced with any other suitable diode. Returning to the discussion of FIG. 2, diode D7 has a resistor R4 coupled to the anode thereof. Diode D7 and resistor R4 are coupled across a voltage divider comprising resistors R5, R6 and R7. The voltage divider is connected between ground and +V_{cc}. The voltage divider is also capacitively coupled to ground via capacitor C7.

The circuit of FIG. 2 is particularly useful in the case where matched FETs are not available. Thus, one can use a shunting circuit employing a schottky diode D7. In this configuration, the schottky D7 is ac coupled to the photodiode D2 via capacitors C1, C2 and biased by the voltage divider network (RS1, RS2, RP) near the turn-on of the schottky D7. When a large optical pulse enters the receiver, i.e., diode D2, the voltage across the schottky exceeds its turn-on voltage and the excess photocurrent is shunted through the diode instead of entering the amplifier AMP2. The voltage applied to the schottky can be adjusted through the voltage divider to allow switching at the desired input signal level. The resistor R4 prevents the impedance of the shorting circuit (comprising D7 and R4) from dropping too low during switching, and the resistor parallel to the schottky, R6, discharges capacitors C5 and C6 at a frequency lower than the high-pass frequency of the ac coupled amplifier input.

In an alternative embodiment of the invention, as depicted in FIG. 2, a second diode/resistor can be added across D7 and R4. This will allow the circuit to clamp both positive and negative pulses. Analogously, the embodiment depicted in FIG. 1 could be modified by removing either Q1 or Q2, in which case the circuit would clamp only positive or negative pulses.

While the invention has been described with respect to preferred embodiments thereof, it will be understood by those skilled in the art that modifications to these embodiments can be made without departing from the spirit and scope of the invention.

## Claims

1. A circuit for shunting excess current in a photodetector, comprising:
a photodetector having means for converting light impulses to electrical current;
an amplifier coupled to receive electrical current output from the photodetector;
a shunt circuit connected across the photodetector, the shunt circuit having means for preventing current from the photodetector from reaching the input of the amplifier if the current exceeds a predetermined threshold.

2. The circuit of claim 1, wherein the shunt circuit comprises:
a transistor coupled cross the inputs of the amplifier, the transistor being actuable responsive to an output of the amplifier.

3. The circuit of claim 2, wherein the transistor is a FET.

4. The circuit of claim 1, wherein the shunt circuit comprises:
first and second transistors coupled in parallel with one another across the inputs of the amplifier, the transistors being actuable responsive to respective outputs of the amplifier.

5. The circuit of claim 4, wherein the transistors are FETs, and the gate of each FET is coupled to a respective output of the amplifier.

6. The circuit of claim 3, wherein the transistors are NFETs, and the gate of each NFET is coupled to a respective output of the amplifier.

7. The circuit of claim 1, wherein the shunt circuit comprises:
a diode coupled across the photodetector, the diode being biased to a level near its turn-on voltage.

8. The circuit of claim 7, wherein the diode is a schottky diode.

9. The circuit of claim 1, wherein the shunt circuit comprises first and second diodes coupled in parallel with one another across the inputs of the amplifier, the diodes being biased to a level near their turn-on voltages.

10. The circuit of claim 9, wherein the diodes are schottky diodes.
